# EUROPÄISCHE PATENTSCHRIFT

(11) **EP 1 752 029 B1**
(45) Veröffentlichungstag und Bekanntmachung des Hinweises auf die Patenterteilung: **25.06.2008**
(21) Anmeldenummer: 06016060.3
(22) Anmeldetag: 02.08.2006
(51) Int. Cl.: A01C 7/04

(54) **Pneumatische Einzelkornsämaschine**
Pneumatic single-grain seeder
Semoir pneumatique monograine

(30) Priorität: 12.08.2005 DE 102005038156
(43) Veröffentlichungstag der Anmeldung: 14.02.2007
(73) Patentinhaber: Amazonen-Werke H. Dreyer GmbH & Co. KG, 49205 Hasbergen (DE)
(72) Erfinder: Johannaber, Stefan Jan, 49536 Lienen (DE)

(56) Entgegenhaltungen:
- DE-A1- 2 310 979
- DE-A1- 2 353 597
- FR-A1- 2 641 441
- US-A- 3 533 535

## Beschreibung

Die Erfindung betrifft eine pneumatische Einzelkornsämaschine gemäß des Oberbegriffes des Patentanspruches 1.

Eine derartige pneumatische Einzelkornsämaschine wird in der US 35 335 35 A beschrieben.

Eine weitere Einzelkornsämaschine ist beispielsweise durch die DE 101 40 341 B4 bekannt. Bei einer derartigen Einzelkornsämaschine weist die Wandstärke des Vereinzelungsorgans im Bereich der Perforationsreihen eine Dicke von 1 mm auf. Die Querschnittsform ist über den gesamten Bereich der Perforierung gleich groß.

Der Erfindung liegt die Aufgabe zugrunde, die Unterbrechung der Druckdifferenz an der Perforation durch die Abdeckvorrichtung zu beschleunigen.

Diese Aufgabe wird erfindungsgemäß durch die Merkmale des Kennzeichens des Patentanspruches 1 gelöst. Infolge dieser Maßnahmen wird durch die geometrische Ausformung der Perforierung auf der der Vereinzelungsseite des Vereinzelungsorgans abgewandten Seite erreicht, dass durch die Abdeckeinrichtung die Perforierung möglichst schnell verschlossen wird. Hierdurch wird somit ein sehr schnelles, quasi schlagartiges verschließen der Perforierung durch die Abdeckeinrichtung erreicht. Somit wird auch trotz der Veränderung des Querschnittes der Perforierung ein optimaler Druckunterschied auf der Vereinzelungsseite des Vereinzelungsorgans gewährleistet.

Eine vorteilhafte Ausgestaltung des Querschnittes der Perforierung ergibt sich dadurch, dass der Querschnitt der Perforierung auf der Vereinzelungsseite des Organs von Ausdehnung in und quer zur Drehrichtung des Organs zumindest annähernd gleich ist, dass die Ausdehnung des Querschnitts der Perforierung auf der der Vereinzelungsseite des Organs abgewendeten Seite des Organs in Drehrichtung des Organs wesentlich kleiner als in axialer Richtung des Organs ist.

Ein besonders schnelles und schlagartiges Verschließen der Perforierung lässt sich dadurch erreichen, dass die Fläche des Querschnittes der Perforierung auf der der Vereinzelungsseite des Organs abgewandten Seite einen rechteckigen Querschnitt aufweist.

Weitere Einzelheiten der Erfindung sind der Beispielsbeschreibung und den Zeichnungen zu entnehmen. Hierbei zeigen
- Fig. 1: die Vereinzelungstrommel in perspektivischer Darstellung,
- Fig. 2: das für eine Saatreihe aus zwei Teilsegmenten zusammengesetzte Segment der Vereinzelungstrommel in der Ansicht von vorne,
- Fig. 3: das für eine Saatreihe aus zwei Teilsegmenten zusammengesetzte Segment der Vereinzelungstrommel in perspektivischer Darstellung,
- Fig. 4: ein Teilsegment der Vereinzelungstrommel in der Vorderansicht,
- Fig. 5: ein Teilsegment in perspektivischer Darstellung,
- Fig. 6: die Ausgestaltung der Verbindung der Perforation mit dem Trommelinnenraum in Seitenansicht,
- Fig. 7: die Perforation in der Einzelheit VII aus Fig. 5,
- Fig. 8: die Einzelheit der Perforation der Einzelheit VIII aus Fig. 3,
- Fig. 9: die Trommel in Teilansicht und in perspektivischer Darstellung mit der Abdeckeinrichtung,
- Fig. 10: die Anordnung der Abdeckeinrichtung im Innenraum der Vereinzelungstrommel in Teilansicht und vergrößerter Darstellung,
- Fig. 11: die Anordnung der Abdeckeinrichtung im Innenraum der Vereinzelungstrommel in Seitenansicht und
- Fig. 12: die Anordnung der Abdeckeinrichtung im Innenraum der Vereinzelungstrommel in Teilansicht und vergrößertem Maßstab.

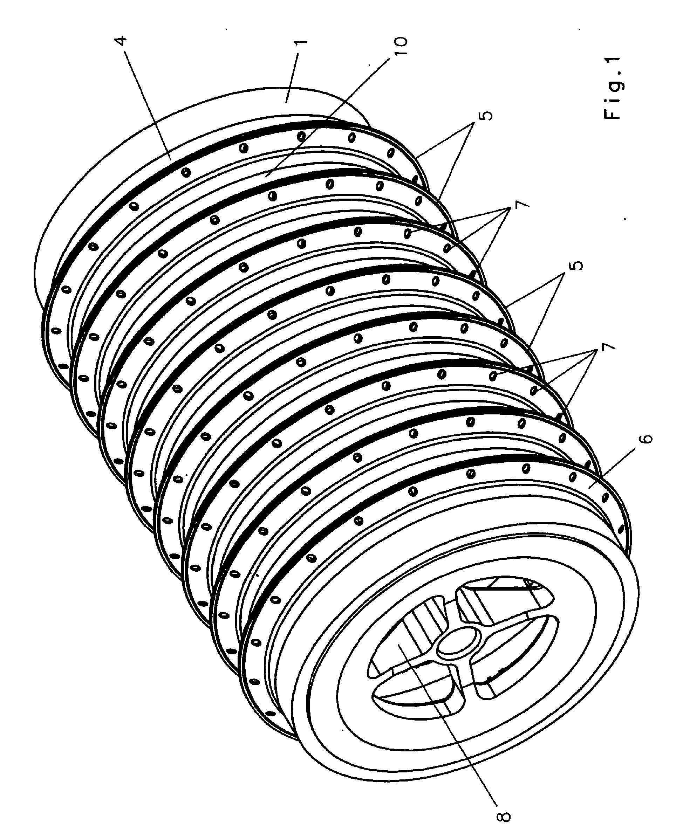

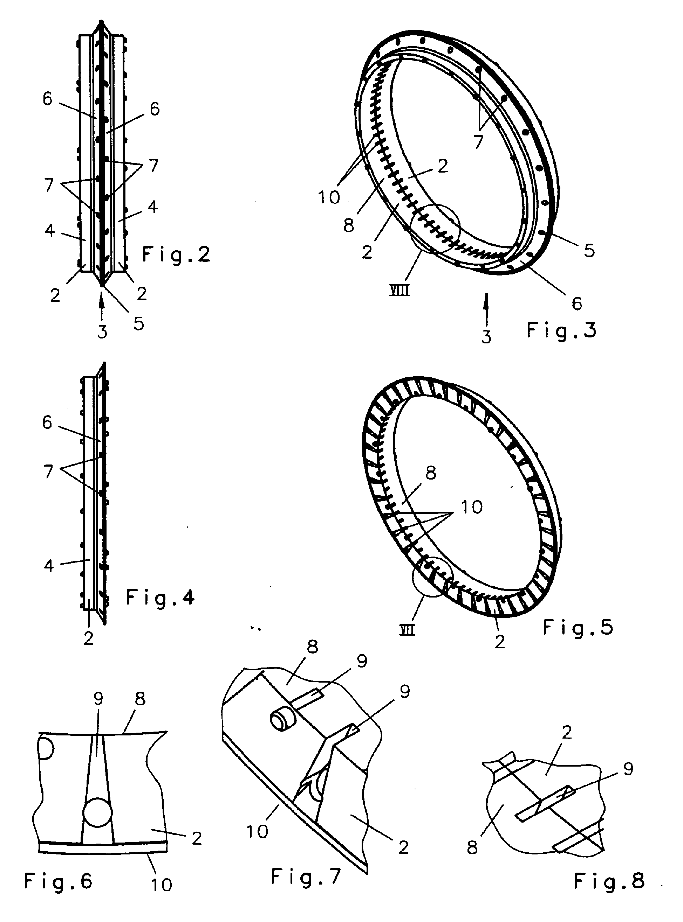

Die Vereinzelungstrommel 1 gemäß Fig. 1 ist in nicht dargestellter Weise drehbar in einem Gehäuse unterhalb eines Saatgutvorratsbehälters einer Einzelkornsämaschine angeordnet. Das Gehäuse bzw. der Saatgutvorratsbehälter weisen zwei voneinander beabstandete Seitenwände auf, die sich parallel zur Bewegungsrichtung der Trommel 1 und somit zumindest annähernd mit der Trommel 1 zusammenwirken. Die Vereinzelungstrommel 1 wird in bekannter Weise mittels eines Antriebes rotierend angetrieben. Die Vereinzelungstrommel 1 besteht aus einzelnen aus Teilsegmenten 2 bestehenden Segmenten 3, die zu einer Vereinzelungstrommel 1 zusammengesetzt sind. Mit in axialer Richtung wirksamen und nicht dargestellten Spannelementen werden diese einzelnen Segmente 3 zusammengehalten. Gemäß dem Ausführungsbeispiel nach Fig. 1 bis 5 weist die Vereinzelungstrommel 1 gegenüber der Trommeloberfläche 4 erhöht ringförmig umlaufende Vereinzelungsgürtel 5 auf, die im Querschnitt dachförmig ausgebildet sind. Wie insbesondere der Fig. 2 zu entnehmen ist, ist der Vereinzelungsgürtel 5 im Querschnitt etwa dreieckförmig ausgebildet. In den beiden Seitendachflächen 6 des Vereinzelungsgürtels 5 sind die Perforationslöcher 7 angeordnet. Die auf beiden Seiten 6 des Vereinzelungsgürtels 5 angeordneten Perforationslöcher 7 sind versetzt zueinander angeordnet, wie insbesondere der Fig. 2 zu entnehmen ist. Die Perforationslöcher 7 münden im mittleren Bereich des aus zwei Teilsegmenten 2 zusammengesetzten Vereinzelungssegmentes 3 in zu der Trommelinnenseite 8 offenen Verbindungskanälen 9. Die Ausgestaltung dieser Verbindungskanäle 9 wird weiter unten erläutert. Die Perforationen 7 werden mit einer Druckdifferenz beaufschlagt, welche von einem Gebläse, welches nicht dargestellt ist, erzeugt wird. Mittels dieses Gebläses ist für die Perforationen 7 eine Druckdifferenz zwischen dem Innenraum 8 der Vereinzelungstrommel 1 und dem Außenbereich 10 der Vereinzelungstrommel 1 zu erzeugen. Diese Druckdifferenz ist derart, so dass, wenn die Trommel 1 mit ihrer Außenseite 10 durch einen Saatgutvorrat geführt wird, dass sich an den Perforationen 7 auf der Außenseite 10 des Vereinzelungsgürtels 5 Samenkörner anlagern.

Den Perforationen 7 eines Vereinzelungsgürtels 5 ist eine von der Vereinzelungstrommel 1 zu der Ablageeinrichtung, die beispielsweise als Säschar ausgebildet ist, führende Ausbringleitung in nicht dargestellter Weise zugeordnet. Durch die versetzte Anordnung der Perforationen 7 eines Vereinzelungsgürtels 5 wird ein größerer Abstand von Perforation 7 zu Perforation 7 geschaffen, so dass sich die Samenkörner in verbesserter Weise an den Perforationen 7 anlagern können, so dass eine verbesserte Vereinzelung als bei der Anordnung der Perforation in einer flächigen Trommel erreicht wird.

Die Verbindungskanäle 9 der Perforationen 7 von der Außenseite 10 der Trommel 1 zur Innenseite 8 der Trommel 1 weisen von der Vereinzelungsseite der Perforation 7 bzw. der Trommel 1 abgewandten Seite 8 einen sich verjüngenden Querschnitt auf, so dass mit einem Druckunterbrechungseinrichtung, die auf der Innenseite 8 der Trommel 1 zur Anlage kommt, die Druckdifferenz sehr schnell unterbrochen wird, so dass sich die Samenkörner wesentlich definierter von den Perforationen 7 bzw. der Vereinzelungstrommel 1 lösen können und wesentlich vergleichmäßigter in die Ausbringleitung gelangen, so dass eine wesentlich bessere vergleichmäßigte Ablage des Saatgutes durch die Ablageeinrichtung der Einzelkornsämaschine gewährleistet ist. Den sich verjüngenden Querschnitt erkennt man in den Fig. 6 bis 8, wobei die Fig. 7 die Einzelheit VII aus der Fig. 5 und die Fig. 8 die Einzelheit VIII aus der Fig. 3 zeigt.

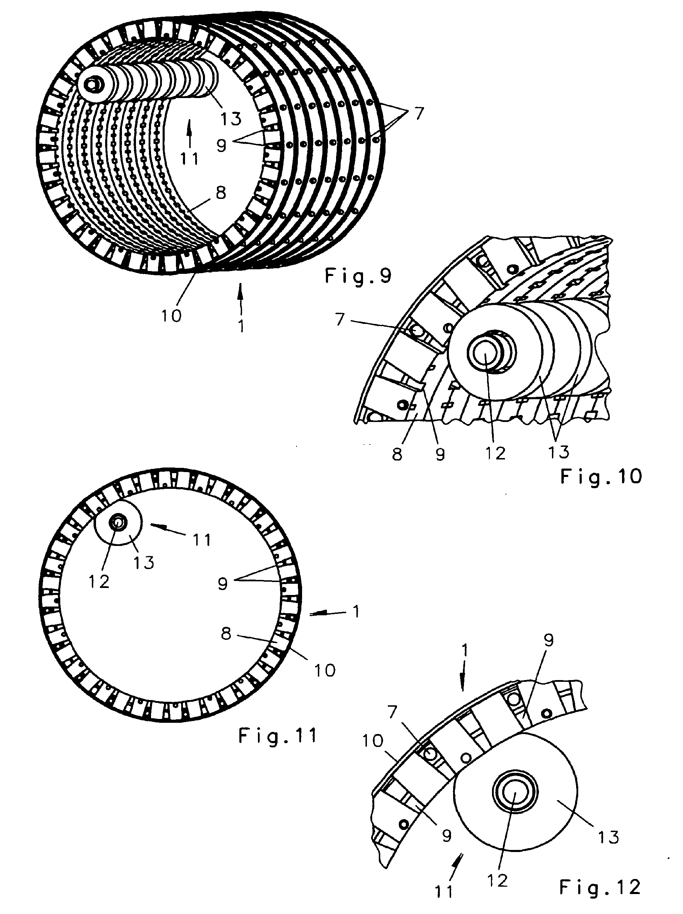

Wie die Fig. 9-12 zeigen, ist im Innenraum der Vereinzelungstrommel 1 auf der der Vereinzelungsseite 10 des Vereinzelungsorgans abgewandten Seite 8 des Vereinzelungsorgans 1, die an die Perforation 7 anliegende Druckdifferenz zum Ablösen der Saatkörner unterbrechende Abdeckeinrichtung 11 in Form von auf einer Welle 12 angeordneten scheibenartigen Rolle 13 angeordnet. Die Trommel 1 weist im Bereich der Perforation 7 und des Vereinzelungsgürtels 5 eine Wandstärke von zumindest 3 mm auf, um den vorbeschriebenen Verlauf der die Außenseite der Perforation 7 mit der Innenseite 8 verbindenden Verbindungskanäle 9 beschriebene Querschnittsform zu ermöglichen, nämlich das die Querschnittsform der Perforierung 7 durch die Ausgestaltung der Verbindungskanäle 9 auf der Vereinzelungsseite 10 des Organs 1 unterschiedlich zu der Vereinzelungsseite 10 des Organs 1 ist. Der Querschnitt der Perforierung 7 ist auf der Vereinzelungsseite 10 des Organs 1 von Ausdehnung in und quer zur Drehrichtung des Organs 1 zumindest annähernd gleich. Die Ausdehnung des Querschnitts der Perforierung 7, der durch den Verbindungskanal 9 gebildet wird, ist auf der Vereinzelungsseite 10 der Vereinzelungstrommel 1 abgewandten Seite 8 der Trommel 1 in Drehrichtung wesentlich kleiner als in axialer Richtung der Trommel 1, wie die Fig. 6-8 zeigen. Die Fläche des Querschnittes der Perforierung 7 bzw. des Verbindungskanals 9 ist auf beiden Seiten der Wandung der Trommel 1 zumindest annähernd gleich groß. Hierbei ist zu beachten, dass die Fläche des Querschnittes der Perforierung 7 auf der Nichtvereinzelungsorgansseite 8 nicht kleiner als die Fläche der Perforierung 7 auf der Vereinzelungsseite 10 ist. Die Fläche des Querschnittes der Perforierung 7 bzw. des Verbindungskanals 9 weist auf der der Vereinzelungsseite 10 der Trommel 1 abgewandten Seite 8 einen rechteckigen Querschnitt auf.

## Patentansprüche

1. Pneumatische Einzelkornsämaschine mit einem Saatgutvorratsbehälter und zumindest einer drehbar angeordneten Vereinzelungsorgan (1), wie Trommel, Riemen, Scheiben, in dessen Umfangsfläche kreisförmig angeordnete Perforationsreihen (7) angebracht sind, einem Gebläse, mittels welchem eine Druckdifferenz zwischen dem Innenraum des Vereinzelungsorgans (1) und dem Außenbereich des Vereinzelungsorgans (1) erzeugbar ist, so dass, wenn das vereinzelungsorgan (1) durch den Saatgutvorrat geführt wird, sich an den Perforationen (7) des perforierten Organs (1) Samenkörner anlagern, wobei auf der Vereinzelungsseite (10) des Vereinzelungsorgans (1) abgewandten Seite (8) des Vereinzelungsorgans (1), die an die Perforation (7) anliegende Druckdifferenz zum Ablösen der Saatkörner unterbrechende Abdeckeinrichtung (11) angeordnet ist, wobei die Abdeckeinrichtung (11) im Bereich der Übergabe des Saatgutes von dem Organ in die Ausbringleitung angeordnet ist, wobei das Organ (1) im Bereich der Perforierung der Perforationsreihen (7) eine Wandstärke von zumindest 3 mm aufweist, wobei die Querschnittsform der Perforierung (7) auf der Vereinzelungsseite (10) des Organs (1) unterschiedlich zu der der Vereinzelungsseite abgewandten seite (8) der Organ ist, **dadurch gekennzeichnet, dass** die Fläche des Querschnittes der Perforierung (7) auf der Nichtorganvereinzelungsseite (8) nicht kleiner als die Fläche der Perforierung (7) auf der Organvereinzelungsseite (10) ist.

2. Einzelkornsämaschine nach Anspruch 1, **dadurch gekennzeichnet, dass** der Querschnitt der Perforierung (7) auf der Vereinzelungsseite (10) des Organs (1) von Ausdehnung in und quer zur Drehrichtung des Organs (1) zumindest annähernd gleich ist, dass die Ausdehnung des Querschnitts der Perforierung (7) auf der der Vereinzelungsseite des Organs abgewendeten Seite (8) des Organs (1) in Drehrichtung des Organs (1) wesentlich kleiner als in axialer Richtung des Organs (1) ist.

3. Einzelkornsämaschine nach einem oder mehreren der vorstehenden Ansprüche, **dadurch gekennzeichnet, dass** die Fläche des Querschnittes der Perforierung (7) auf der der Vereinzelungsseite des Organs abgewandten Seite (8) einen rechteckigen Querschnitt aufweist.

## Claims

1. Pneumatic single-grain dispensing seed drill, having a seed hopper and at least one rotatably disposed separating element (1), such as a drum, a belt or discs, in the circumferential face of which are provided rows of perforations (7) disposed in a circular manner, a fan, by means of which a pressure difference can be established between the interior of the separating element (1) and the outer region of the separating element (1) so that, when the separating element (1) is guided through the supply of seeds, seed grains accumulate at the perforations (7) of the perforated element (1), the covering device (11) which interrupts the pressure difference for releasing the seed grains adjacent the perforation (7) being disposed on the side (8) of the separating element (1) remote from the separating side (10) of the separating element (1), the covering device (11) being disposed in the region where the seeds are transferred from the element into the distribution line, the element (1), in the region of the perforation of the rows of perforations (7), having a wall thickness of at least 3 mm, and the cross-sectional shape of the perforation (7) on the separating side (10) of the element (1) being different from the side (8) of the element remote from the separating side, **characterised in that** the area of the cross-section of the perforation (7) on the non-separating side (8) of the element is not smaller than the area of the perforation (7) on the separating side (10) of the element.

2. Single-grain dispensing seed drill according to claim 1, **characterised in that** the cross-section of the perforation (7) on the separating side (10) of the element (1) is at least approximately identical in respect of expansion in, and transversely relative to, the direction of rotation of the element (1), and **in that** the expansion of the cross-section of the perforation (7) on the side (8) of the element (1) remote from the separating side of the element is substantially smaller in the direction of rotation of the element (1) than in the axial direction of the element (1).

3. Single-grain dispensing seed drill according to one or more of the preceding claims, **characterised in that** the area of the cross-section of the perforation (7), on the side (8) remote from the separating side of the element, has a rectangular cross-section.

## Revendications

1. Semoir pneumatique monograine comportant un réservoir d'alimentation en semences et au moins un organe séparateur (1), monté à rotation, tel qu'un tambour, une courroie, des disques, et dont la surface périphérique comporte des rangées de perforations (7) réparties en cercles, ainsi qu'une machine soufflante qui crée une différence de pression entre le volume intérieur de l'organe séparateur (1) et la région extérieure de l'organe séparateur (1) de façon que lorsque l'organe séparateur (1) traverse la réserve de semences, des graines de semence se fixent sur les perforations (7) de l'organe séparateur (1),
le côté (8) de l'organe de séparation (1) autre que son côté de séparation (10), comportant une installation de recouvrement (11) pour couper la dépression appliquée aux perforations et permettre le décrochage des graines de semence,
l'installation de recouvrement (11) étant prévue dans la région du transfert des semences de l'organe séparateur pour une conduite de distribution,
l'organe séparateur (1) ayant dans la région des perforations, des rangées de perforations (7), une épaisseur de paroi d'au moins 3 millimètres,
la forme de la section des perforations sur le côté de séparation (10) de l'organe séparateur (1) étant différente de celle du côté (8) opposé au côté de séparation de l'organe séparateur,
**caractérisé en ce que**
la surface de la section des perforations (7) sur le côté (8) qui n'assure pas de séparation est inférieure à la surface des perforations (7) sur le côté (10) assurant les séparations.

2. Semoir monograine selon la revendication 1,
**caractérisé en ce que**
la section des perforations (7) sur le côté de séparation (10) de l'organe séparateur, a une extension au moins identique dans le sens de rotation et transversalement au sens de rotation de l'organe séparateur (1), alors que l'extension de la section des perforations (7) sur le côté (8) opposé au côté de séparation de l'organe séparateur (1), dans le sens de rotation de l'organe (1), est beaucoup plus petite que dans la direction axiale de l'organe séparateur (1).

3. Semoir monograine selon une ou plusieurs des revendications précédentes, **caractérisé en ce que**
la surface de la section des perforations (7) sur le côté (8) qui n'est pas le côté de séparation de l'organe séparateur correspond à une section rectangulaire.
